Europäisches Patentamt

European Patent Office

Office européen des brevets

(19)

(11) Publication number: **0 032 416**
**B2**

# NEW EUROPEAN PATENT SPECIFICATION

(45) Date of publication of the new patent specification :
16.06.87

(21) Application number : 81300010.6

(22) Date of filing : 02.01.81

(51) Int. Cl.⁴ : **C 02 F 5/08**, C 02 F 5/10,
C 02 F 5/12, G 21 F 9/30,
G 21 F 9/12

(54) Descaling process.

(30) Priority : 08.01.80 GB 8000584

(43) Date of publication of application :
22.07.81 Bulletin 81/29

(45) Publication of the grant of the patent :
02.11.83 Bulletin 83/44

(45) Mention of the opposition decision :
16.06.87 Bulletin 87/25

(84) Designated contracting states :
BE CH DE FR GB IT LI LU NL SE

(56) References cited :
GB-A- 188 778
US-A- 2 257 186
US-A- 3 331 773
US-A- 3 433 739
US-A- 3 592 764
Water-Formed Scale Deposits, Cowan & Weintritt (1976) - Gulf Publishing Company, page 447
Inorganic Chemistry, Phillips & Williams, vol. II, Oxford University Press (1966), page 321
Handbook of Chemistry & Physics, 50th Ed., page B-161
Nuclear Energy (1981), vol. 20, Oct. 5, no. 5, pp. 403-408
Nuclear News (November 1983), pp. 102/4/6
Nuclear Europe No. 9, (1984), pp. 27-29
Page A42 from ERPI NP 3177, Project 1329-1 Final Report

(73) Proprietor : CENTRAL ELECTRICITY GENERATING BOARD
Sudbury House 15, Newgate Street
London ECIA 7AU (GB)

(72) Inventor : Wood, Christopher John
3 Highlands Drive
Nr. Nibley Gloucestershire (GB)
Inventor : Bradbury, David
Pencot
Tresham Gloucestershire (GB)
Inventor : Swan, Timothy
20 Manor Walk Thornbury
Bristol (GB)
Inventor : Segal, Michael Giles
64 Worrall Road Clifton
Bristol (GB)
Inventor : Sellars, Robin Michael
Rose Cottage Walkley Wood
Nailsworth Gloucestershire (GB)

(74) Representative : Allard, Susan Joyce et al
BOULT, WADE & TENNANT 27 Furnival street
London EC4A 1PQ (GB)

Page 196 of thesis Submitted to University of Glasgow in November 1984 by A.M. Lennon
Advanced Inorganic Chemistry, Cotton & Wilkinson, 3rd Ed. pp. 682,723
An introduction to Transition-Metal Chemistry, L.E. Orgel, Methuen (1960), Chapter 9, Section 9.2
Advances in Organic & Radiochemistry, Emeteus & Sharpe, Academic Press (1969), vol. 12, pages 189-194
Inorganic Chemistry, Th. Moeller, p. 542
Inorganic Chemistry, C.S.G. Phillips and R.J.P. Williams (1966), pp. 169-172
The file contains technical information submitted after the application was filed and not included in this specification

## Description

The present invention relates to a descaling process. In particular the invention relates to a process for the dissolution of oxide deposits from boilers and for descaling and thereby decontaminating the cooling system, or components associated with the cooling system, of water cooled nuclear reactors, or other contaminated plant items, using particular decontaminating reagents.

The construction materials of water-cooled nuclear reactors are corroded by the aqueous coolant and small amounts of their constituent elements are released into the coolant. These constituent elements become neutron activated in the reactor core and are ultimately deposited in the form of their oxides on the vessel and pipework surfaces throughout the coolant circuits, giving rise to large radiation dose rates in the circuit. It is desirable to remove these oxide deposits to reduce the radiation dose rates prior to man access.

Water systems containing oxide scales (e. g. boilers) have traditionally been cleaned using acids and complexing reagents. These reagents depend on an elevated hydrogen ion concentration $[H^+]$ to attack and destabilise the metal oxide and sometimes employ a complexing agent to increase the thermodynamic solubility of the resulting metal ions.

An example of this type of reagent is a mixture of oxalic and citric acids. This type of reagent will dissolve the deposited oxides formed in the coolant circuits of water cooled nuclear reactors when used at high concentrations in the range of from 3 to 6 % by weight. However, the volumes of coolant circuits are large and this cleaning process gives rise to unacceptably large volumes of radioactive waste. A new reagent is required to give rapid dissolution of oxides when used at low concentrations. If this is achieved then both the reagent and the dissolved radioactive compounds could be removed by ion-exchange giving rise to a low volume, solid waste which can be easily handled. The maximum feasible concentration of reagent for such a process is generally about 0.1 % by weight. At this concentration the traditional acidic cleaning reagents dissolve the deposited oxides in water-cooled reactors unacceptably slowly.

The major ionic constituent of all deposited oxides occurring in the circulating coolant of a watercooled nuclear reactor is FE$^{III}$ (see Table 1 hereinbelow for details of these oxides and their compositions).

Table 1

Ionic Composition of Typical Nuclear Reactor Deposited Oxides

| Ionic Constituents of Oxides | Oxide Types | | | |
|---|---|---|---|---|
| | $Fe_2O_3$ | $Fe_3O_4$ | $Fe_2NiO_4$ | $Fe_{2.25}Cr_{0.15}Ni_{0.6}O_4$ |
| $Cr^{3+}$ | 0 | 0 | 0 | 0.15 |
| $Ni^{2+}$ | 0 | 0 | 1.0 | 0.60 |
| $Fe^{2+}$ | 0 | 1.0 | 0 | 0.40 |
| $Fe^{3+}$ | 2.0 | 2.0 | 2.0 | 1.85 |

$Fe^{3+}$ is the major metal ion in these water reactor deposited oxides ($^{60}Co^{2+}$ and $^{58}Co^{2+}$, the major sources of radiation doses, are chemically insignificant).

We have found that these deposited oxides are susceptible to attack by a reducing agent which destabilises the deposited oxides by transferring electrons thereby converting the Fe$^{III}$ in the deposit to Fe$^{II}$. We have discovered that not all reducing agents attack the deposited oxides rapidly, the most effective being those that can transfer a single electron since each Fe$^{III}$ can only readily accept one electron. Of the one-electron reducing agents only those which provide an easy pathway for electron transfer dissolve the deposited oxides rapidly and examples of these are the low oxidation states of certain transition metals which either promote outer sphere electron transfer (i. e. no bond formed between the oxide deposit and the reducing agent) or act as an inner sphere reductant, the electron being transferred via a bridging atom which binds to both the low oxidation-state transition metal and the deposited oxide, or work by a combination of these two mechanisms. The present invention is based on this finding.

Accordingly, the present invention provides a process for the removal of deposits consisting essentially of the oxides of one or more transition metals from a surface, which process comprises contacting the said surface at a pH in the range of from 2.0 to 7.0 with a reagent comprising a one-electron reducing agent which is the complex formed between a low oxidation-state transition metal ion

3

and a complexing agent, the complex being thermally stable at the operating pH.

In a particularly preferred aspect the present invention provides a process for decontaminating the cooling system or a component associated with the cooling system of a water-cooled nuclear reactor, or other contaminated plant items, which process comprises circulating a decontaminating reagent at a pH in the range of from 2.0 to 7.0 through the cooling system of the reactor, or contacting a component associated with the cooling system or containing other contaminated plant items with a decontaminating reagent at a pH in the range of from 2.0 to 7.0, the decontaminating reagent comprising a one-electron reducing agent which is the complex formed between a low oxidation-state transition metal ion and a complexing agent, the complex being thermally and radiolytically stable at the operating pH.

In order to employ the low oxidation-state reducing agents the presence of a complexing agent is necessary so that the contamination process may be carried out at a pH above 2, thereby mimimising the corrosion of the cleaned base metal during the dissolution of the deposited oxides. The complexing agent maintains the low oxidation-state metal ions, the oxidised metal ions and the metal ions resulting from the dissolution of the deposited oxides in a solution at a pH of up to 7.0.

The use of these reagents in the process of the present invention reduces the corrosion of the base metal below the level observed using reagents which do not contain a one-electron reducing agent. This is because in the absence of a rapid reducing reaction at the deposited oxide/reagent interface, the base metal supplied electrons to reduce the deposited oxide, thereby being itself corroded by the process. Corrosion with the process of this invention is negligible because oxide reduction by the reagent is very rapid and reduction by the metal corrosion process is therefore unimportant.

It will be appreciated that it is important that any reagent employed should result in minimal corrosion of the surfaces being treated. Corrosion tests have been carried out with $V^{II}$ picolinate with a variety of materials, both with and without the addition of surfactants and corrosion inhibitors. Low corrosion rates have been found in all cases (see Table 2 hereinbelow). The most sensitive material tested was AISI410 (martensitic stainless iron). For comparison, this material corrodes about 50 times faster in a 6 % oxalic acid based cleaning reagent than in the $V^{II}$ picolinate reagent for which test results are given in Table 2.

(See Table 2 page 5)

The reagents of the present invention are suitable for use at metal ion concentrations in the range of from $10^{-3}$ to 2 M, preferably in the range of from $10^{-3}$ to $10^{-2}$ M. The reagents are used at a pH in the range of from 2 or 7 preferably in the range of from 4.0 to 6.0 and are generally used at a temperature in the range of from ambient to 200 °C, preferably in the range of from 60° to 80 °C. The molar concentration of the complexing agent is generally from 3 to 10 times the molar concentration of the low oxidation-state transition metal ion agent. When formate or acetate is present as the counterion in the decontamination reagents used in the process of the invention they are generally employed at a molar concentration of from 5 to 20 times the molar concentration of the low oxidation-state transition metal ion.

As mentioned above the complexing agent used in the reagents of the invention must, in use of the reagent, maintain all metal ions present in solution at a pH of up to 7.0. It is beneficial if the complexing agent promotes spin pairing when used with $Cr^{II}$ so that the $Cr^{II}$ ion will undergo rapid outer sphere electron transfer reactions, and should not lower the redox potential of the system to a value such that the rate of water reduction can compete with the dissolution process. It will also be appreciated by those skilled in the art that the complexing agent must have an adequate radiation stability when used to decontaminate the cooling system or a component associated with the cooling system of a water-cooled nuclear reactor, or other contaminated plant items. Examples of suitable complexing agents are ethylene diamine tetracetic acid, citric acid, picolinic acid, nitrilotriacetic acid, 2,6-dicarboxypyridine, histidine and 2,2'-bipyridyl, although 2,2'-bipyridyl does show some sensitivity to radiation and it is therefore not suitable for use in decontaminating reagents for use in in-core regions, although it is suitable for use for component and out of core decontaminations where radiation dose rates are $10^4$ to $10^5$ times smaller.

Specific examples of the reagents for use in the invention are a one-electron reducing agent based on $V^{II}$ in combination with picolinic acid and one-electron reducing agent based on $Cr^{II}$ in combination with bipyridyl.

It has been found that when formate is present as the counterion and the one-electron reducing agent is based on $V^{II}$ or $Cr^{II}$, radiation will regenerate the low oxidation states $V^{II}$ or $Cr^{II}$. The reaction sequence is as follows for $V^{II}$, picolinate being chosen as the example of the complexing agent :

$$H_2O \rightarrow H \ e^-_{aq} OH \ H_2O \ H_2$$

$$H + HCOO^- \rightarrow H_2 + CO^-_2 \qquad\qquad 1$$

$$OH + HCOO^- \rightarrow H_2O + CO_2 \qquad\qquad 2$$

$$CO^-_2 + V^{III} \rightarrow V^{II} + CO_2 \uparrow \qquad\qquad 3$$

$$e^-_{aq} + V^{III} \rightarrow V^{II} \qquad\qquad 4$$

$$V^{II} + OH \rightarrow V^{III} + OH^- \qquad\qquad 5$$

$$OH + picolinate \rightarrow products \qquad\qquad 6$$

## Table 2

### Materials Corrosion in LOMI Reagent (Laboratory Tests)

| Metal | Area cm² | pH | Special Conditions | time h | wt. loss mg | penetration μm | Rate μm/h |
|---|---|---|---|---|---|---|---|
| AISI 410 | 12 | 4.0 | Acetate buffer 0.1 M | 3.5 | 17.0 | 1.7 | 0.5 |
| AISI 410 | 12 | 5.3 | Coupled to AISI 321 Stainless Steel | 5.5 | 11.8 | 1.2 | 0.2 |
| AISI 410 | 12 | 5.2 | γ-Radiation Field ∼ 0.5 M rad/hr; 70°C | 5.5 | 3.1 | 0.3 | 0.05 |
| AISI 410 | 11 | 4.7 | Tetra-n-butyl Ammonium Hydroxide 20 ppm | 5.5 | 6.8 | 0.7 | 0.1 |
| AISI 410 | 11 | 4.9 | Hyamine* 1622 (Cationic Surfactant) 20 ppm | 6.2 | 0.7 | 0.07 | 0.01 |
| INCONEL 600 | 9 | 4.8 | — | 5 | 0 | 0 | 0 |
| AISI 304 | 10 | 4,8 | — | 5.5 | 0.2 | 0.02 | 0.004 |
| AISI 304 | 10 | 4.9 | 2 MBT** (Corrosion Inhibitor) 10⁻³M | 6 | 0 | 0 | 0 |
| AISI 321 | 10 | 4.9 | — | 5 | 0 | 0 | 0 |
| ZIRCALOY−2 | 12 | 4.7 | — | 5.5 | 0.1 | 0.01 | 0.002 |

General Conditions : 80 °C : $[V^{II}]$ = 4-5 × 10⁻³ M : Total [Pic] = 2 × 10⁻² M : [Formate] = 0.1 M
*HYAMINE is a Registered Trade Mark
**2 MBT is an abbreviation for 2-mercapto-benzthiazole
ppm = parts per million
« Inconel » and « Zircaloy » are trademarks.

As long as the concentration of HCOO$^-$ is sufficiently high to compete with V$^{II}$ and picolinate in reactions (5) and (6), the overall reaction is to reduce V$^{III}$ to V$^{II}$, thereby regenerating the low oxidationstate metal ion reagent.

Whilst the preferred Cr$^{II}$ bipyridyl reagent is radiation unstable, under certain circumstances Cr$^{II}$ can be used with other ligands when the regeneration of Cr$^{II}$ may occur.

The reagents used in the process of the invention may be prepared in concentrated form (e. g. up to 2 M) by a number of methods. Examples of such methods are :

(i) The reduction of Cr$^{III}$ orC$^{IV}$ as the sulphate or perchlorate under an inert atmosphere using either zinc amalgam or a standard electrochemical method. The latter method employs either a lead or mercury cathode while a platinum or other metal anode is immersed in the corresponding acid at the same concentration. The amalgam method leads to a solution containing dissolved zinc and the electrochemical method is therefore preferred. Since SO$_4{}^{2-}$ and ClO$_4{}^-$ are not desirable in the reactor they are exchanged for either formate or acetate ion by passage of the reduced solution through an anion exchange resin in the appropriate form ; and

(ii) in the case of V$^{II}$ formate proportion, the ion exchange step can be eliminated by direct electrolytic reduction of a suspension of V$_2$O$_5$ in formic acid. As the V$_V$ is reduced, the suspension is taken into solution. This has the advantage that the danger of contamination by other anions is much reduced.

After carrying out the process of the invention, the reagents and any radioactivity are removed from the process solution by ion exchange. Passage through a strong acid ion exchange resin removes > 99 % of the radioactivity and some of the complexing reagent. The remainder of the reagent is removed by passage of the liquids through an anion exchange resin. The process thus concentrates the radioactivity from the contaminated surfaces into a small volume of solid cation exchange resin.

The present invention will be further described with reference to the following Examples.

### Example 1

Synthetic reactor oxide powders of the composition given in Table 1 above were prepared and used as standards against which different decontaminating reagents were compared. These oxides were dissolved both in the reagents of this invention and also in conventional reagents for the purposes of comparison. The dissolution reaction was found to follow cubic kinetics, i. e. the rate was proportional to the surface area of approximately spherical particles and this allowed the determination of the time for complete dissolution of the powdered sample (t∞). The smaller the value t∞ the more rapid the dissolution reaction. Values of t∞ for different reagents are compared in Tables (3) and (4) for dissolution by acids and chelants alone and dissolution by the reagents of the invention. In all cases, the single electron low oxidation-state metal ion reductants dissolve the oxide faster than do conventional reagents even when the low oxidation-state metal ion reducing agent is employed at 1-2 orders of magnitude lower concentration.

## Table 3

### Oxide Dissolution with Acids and Chelating Agents only

| Reagent | Concentration (M) | H₁3 (M) | T °C | Dissolution time $t_{oo}$ (min) | | |
|---|---|---|---|---|---|---|
| | | | | $Fe_2O_3$ (350) | $Fe_2NiO_4$ | $Fe_3O_4$ |
| EDTA | 0.1 | $10^{-7}$ | 60 | $3 \times 10^5$ | — | — |
| EDTA | 0.1 | $10^{-5}$ | 60 | $1.5 \times 10^4$ | $\geq 2 \times 10^6$ | $2 \times 10^4$ |
| EDTA | Sat. | $10^{-3}$ | 60 | $10^4$ | — | — |
| Citrate/Oxalate | Both 0.1 | $10^{-6.5}$ | 60 | $>10^6$ | — | $10^5$ |
| Citrate/Oxalate | Both 0.1 | $10^{-5}$ | 60 | $3.5 \times 10^5$ | $>2 \times 10^6$ | — |
| Citrate/Oxalate | Both 0.1 | $10^{-3}$ | 60 | $10^4$ | — | $2.5 \times 10^3$ |
| Citrate | 0.5 | $10^{-3.3}$ | 80 | — | $5 \times 10^4$ | — |
| Bipyridyl | 0.01 | $10^{-2.5}$ | 60 | $>4 \times 10^5$ | — | — |
| Catechol | 0.1 | $10^{-3}$ | 80 | $\geq 10^4$ | — | — |
| $H_2SO_4$ | 2.15 | 4.3 | 60 | 360 | $6 \times 10^5$ | — |
| HCI | 0.1 | 0.1 | 60 | $1.7 \times 10^4$ | $\geq 2 \times 10^6$ | $10^4$ |
| HCI | 1.0 | 1.0 | 60 | 240 | $8 \times 10^5$ | $10^3$ |
| HCI | 4.0 | 4.0 | 60 | — | — | — |

The Figure 350 which appears in brackets in the above Table refers to the calcining temperature of the oxide in degrees Centigrade.

## Table 4

### Oxide Dissolution with Reducing Agents

| Reductant | Conc. (M) | Other Reagent | Conc. (M) | H+ (M) | T °C | Dissolution time $t_{\infty}$ min. | | | |
|---|---|---|---|---|---|---|---|---|---|
| | | | | | | $Fe_2O_3$ (350) | $Fe_2NiO_4$ | $Fe_3O_4$ | $Fe_{2.25}Cr_{0.15}Ni_{0.6}O_4$ |
| $Cr^{2+}$ | 0.001 | Bipyridyl | 0.005 | $10^{-3}$ | 23 | 50 | — | — | — |
| $Cr^{2+}$ | 0.002 | Bipyridyl | 0.02 | $10^{-4}$ | 60 | 70 | — | — | — |
| $Cr^{24\cdot}$ | 0.004 | Bipyridyl | 0.02 | $10^{-3.2}$ | 80 | — | 500 | — | — |
| $V^{2+}$ | 0.002 | Bipyridyl | 0.01 | $10^{-4.5}$ | 80 | 150 | — | — | — |
| $V^{2+}$ | 0.004 | Bipyridyl | 0.02 | $10^{-4.6}$ | 80 | | $2.3 \times 10^3$ | | |
| $V^{2+}$ | 0.002 | Picolinate | 0.01 | $10^{-4.1}$ | 60 | 25 | — | — | — |
| $V^{2+}$ | 0.0017 | Picolinate | 0.01 | $10^{-3.1}$ | 80 | — | 300 | — | — |
| $V^{2+}$ | 0.0017 | Picolinate | 0.01 | $10^{-3.6}$ | 80 | — | — | $\leq 10$ | 3000 |

0 032 416

# 0 032 416

### Example 2

In order to go through all the processes necessary to use low oxidation-state metal ion reducing agents as reactor decontaminating agents, a five litre scale apparatus was constructed in which the reagent was prepared, circulated over a contaminated pipework sample which has been removed from a reactor, and the dissolved activity and reagents there-after removed from the process liquid by ion exchange.

The low oxidation-state metal ion $V^{II}$ was prepared electrochemically from $V^{IV}$ as the sulphate. The 5 litre vessel (corresponding to the circuit to be cleaned) was filled with a degassed solution of picolinic acid at the required temperature and concentration, and sufficient of the reducing agent added to react with the quantity of oxide to be dissolved. The concentration of the reagent was $2 \times 10^{-3}$ M $V^{II}$ metal ion and 5 times this concentration of picolinic acid.

Samples of contaminated reactor pipework fabricated in stainless steel and mild steel were decontaminated in the 5 litre scale vessel using the $V^{II}$ picolinate decontaminating reagent with acetate counter ion. The conditions of these decontaminations and the decontamination factors achieved are given in Table 5. These reagents dissolve the water-cooled reactor oxide deposits at rates comparable to conventional reagents employed at 100 times the concentration. Runs 6 to 9 are given for comparison purposes.

(See Table 5 page 10)

## Table 5

### Decontamination of Reactor Exposed Specimens in 5 Litre Scale Apparatus

| Run No. | Sample | Concentrations | Conditions | Time min | Décontamination Factor |
|---|---|---|---|---|---|
| 1 | 321 Stainless Steel | $V^{II}$ 2 × 10⁻³M<br>Picolinate1 × 10⁻²M | Temp = 80°C<br>pH $\sim$ 5 | 750 | 6.5 |
| 2 | 321 Stainless Steel | $V^{II}$ 4 × 10⁻³M<br>Picolinate 2 × 10⁻²M | Temp = 80°C<br>pH = 5.2 | 690 | 35 |
| 3 | Mild Steel | $V^{II}$ 4 × 10⁻³M<br>Picolinate 1.5 × 10⁻²M | Temp = 80°C<br>pH = 6.0 | 2710 | 7 |
| 4 | Mild Steel | $V^{II}$ 4 × 10⁻³M<br>Picolinate 1.5 × 10⁻²M | Temp = 80°C<br>pH $\approx$ 5.3 | 700 | 6.5 |
| 5 | Mild Steel | $V^{II}$ 4 × 10⁻³M<br>Picolinate 2 × 10⁻²M | Temp $\approx$ 80°C<br>pH = 5.2 | 450 | 6 |
| *6 | Mild Steel | Citric Acid 2 × 10⁻³M<br>Oxalic Acid 3 × 10⁻³M<br>EDTA 3 × 10⁻³M<br>Wetting Agent Trace<br>Ammonia to $\sim$ pH 4 | Temp = 80°C<br>pH $\approx$ 3.85 | 327 | 2.4 |
| *7 | Mild Steel | Picolinate 1.5 × 10⁻²M | Temp = 80°C<br>pH = 5.8 | 705 | 2.4 |
| *8 | 321 Stainless Steel | Oxalate 3.6%<br>Citrate 0.5%<br>Ammonia to pH $\sim$ 4<br>Corrosion<br>Inhibitor 0.003%<br>Wetting Agent 0.006% | T = 80°C<br>pH 3.7 | 1350 | 10 |
| *9 | Mild Steel | As (8) above<br>except:<br>·Ammonia to pH $\sim$ 3 | T = 80°C<br>pH 3.0 | 375 | 2.5 |

*Comparative examples.

0 032 416

It will be understood that the process of the invention may be used either by itself or in combination with other established cleaning reagents. For example, treatment with the reagent of the invention might be preceded by a potassium permanganate preoxidation step.

It will be appreciated by those skilled in the art that the reagents used in the process of the invention are oxygen sensitive and must therefore be used under a non-oxidising atmosphere.

## Claims

1. A process for the removal of deposits consisting essentially of the oxides of one or more transition metals from a surface, which process comprises contacting the said surface at a pH in the range of from 2.0 to 7.0 with a reagent comprising a one-electron reducing agent which is the complex formed between a low oxidation-state transition metal ion and a complexing agent, the complex being thermally stable at the operating pH.

2. A process for decontaminating the cooling system or a component associated with the cooling system of a water-cooled nuclear reactor, or other contaminated plant items, which process comprises circulating a decontaminating reagent at a pH in the range of from 2.0 to 7.0 through the cooling system of the reactor, or contacting a component associated with the cooling system or containing other contaminated plant items with a decontaminating reagent at a pH in the range of from 2.0 to 7.0, the decontaminating reagent comprising a one-electron reducing agent which is the complex formed between a low oxidation-state transition metal ion and a complexing agent, the complex being thermally and radiolytically stable at the operating pH.

3. A process as claimed in claim 1 or claim 2 wherein the complexing agent when used with a one-electron reducing agent based on $Cr^{II}$ promotes spin pairing.

4. A process as claimed in any one of the preceding claims wherein the complexing agent is ethylene diamine tetracetic acid, citric acid, picolinic acid, 2,2'-bipyridyl, nitrilotriacetic acid, histidine or 2,6-dicarboxy pyridine.

5. A process as claimed in claim 1 or claim 2 which comprises a one-electron reducing agent based on $V^{II}$ and picolinic acid as the complexing agent.

6. A process as claimed in claim 1 or claim 2 which comprises a one-electron reducing agent based on $Cr^{II}$ and bipyridyl as the complexing agent.

7. A process as claimed in any one of the preceding claims wherein the reagent is used at a temperature in the range of from ambient temperature to 200 °C.

8. A process as claimed in claim 6 wherein the reagent is used at a temperature in the range of from 60° to 80 °C.

9. A process as claimed in any one of the preceding claims wherein the concentration of the low oxidation-state transition metal ion in the reagent is in the range of from $10^{-3}$ to 2 M.

10. A process as claimed in claim 9 wherein the concentration of the low oxidation-state transition metal ion is in the range $10^{-3}$ to $10^{-2}$ M.

11. A process as claimed in any one of the preceding claims which is carried out at a pH in the range of from 4 to 6.

12. A process as claimed in any one of the preceding claims wherein the molar concentration of the complexing agent is from 3 to 10 times the molar concentration of the low oxidation-state transition metal ion.

13. A process as claimed in any one of the preceding claims wherein formate or acetate is present as a counterion at a molar concentration of from 5 to 20 times the molar concentration of the low oxidation-state transition metal ion.

14. A process as claimed in claim 13 when appendant to claim 2 wherein formate is present as the counterion and the one-electron reducing agent is based on $Cr^{II}$ or $V^{II}$ in which process the low oxidation state $V^{II}$ of vanadium or the low oxidation state $Cr^{II}$ of chromium is regenerated by radiation during the decontamination process.

15. A process as claimed in claim 2 wherein after treatment of the cooling system, or a component associated with the cooling system or other contaminated plant items, the decontaminating reagent is subjected to treatment with an ion exchange resin to remove the radioactivity therefrom.

## Patentansprüche

1. Verfahren zum Entfernen von Belägen, die im wesentlichen aus den Oxiden eines oder mehrerer Übergangsmetalle bestehen, von einer Oberfläche, dadurch gekennzeichnet, daß die Oberfläche bei einem pH-Wert im Bereich von 2,0 bis 7,0 mit einem Reagenz in Berührung gebracht wird, das ein Ein-Elektronen-Reduktionsmittel enthält, welches der zwischen einem Übergangsmetallion niederer Oxidationsstufe und einem Komplexbildner gebildete Komplex ist, der bei dem Betriebs-pH-Wert stabil ist.

2. Verfahren zum Dekontaminieren des Kühlsystems eines wassergekühlten Atomreaktors oder eines dem Kühlsystem zugeordneten Bauteils oder von anderen kontaminierten Anlageteilen, dadurch

11

**0 032 416**

gekennzeichnet, daß ein dekontaminierendes Reagenz bei einem pH-Wert im Bereich von 2,0 bis 7,0 durch das Kühlsystem des Reaktors geleitet oder ein dem Kühlsystem zugeordnetes Bauteil oder ein anderes, kontaminiertes Anlageteil mit einem Reagenz bei einem pH-Wert im Bereich von 2,0 bis 7,0 in Berührung gebracht wird, wobei das dekontaminierende Reagenz ein Ein-Elektronen-Reduktionsmittel enthält, das der zwischen einem Übergangsmetallion niederer Oxidation und einem Komplexbildner gebildete Komplex ist, der beim Betriebs-pH-Wert thermish und radiolytisch stabil ist.

3. Verfahren nach Anspruch 1 oder 2, dadurch gekennzeichnet, daß der Komplexbildner bei Verwendung mit einem Ein-Elektronen-Reduktionsmittel auf der Basis von Cr$^{II}$ die Spinpaarung unterstützt.

4. Verfahren nach jedem der vorstehenden Ansprüche dadurch gekennzeichnet, daß der Komplexbildner Äthylendiamin-Tetraessigsäure, Zitronensäure, Pikolinsäure, 2,2'-Bipyridyl, Nitrilotriessigsäure, Histidin oder 2,6-Dicarboxypyridin ist.

5. Verfahren nach Anspruch 1 oder 2, gekennzeichnet durch ein Ein-Elektronen-Reduktionsmittel auf der Basis von V$^{II}$ und Pikolinsäure als Komplexbildner.

6. Verfahren nach Anspruch 1 oder 2, gekennzeichnet durch ein Ein-Elektronen-Reduktionsmittel auf der Basis von Cr$^{II}$ und Bipyridyl als Komplexbildner.

7. Verfahren nach jedem der vorstehenden Ansprüche, dadurch gekennzeichnet, daß das Reagenz bei einer Temperatur im Bereich von Raumtemperatur bis 200 °C verwendet wird.

8. Verfahren nach Anspruch 6, dadurch gekennzeichnet, daß das Reagenz bei einer Temperatur im Bereich von 60 bis 80 °C verwendet wird.

9. Verfahren nach jedem der vorstehenden Ansprüche, dadurch gekennzeichnet, daß die Konzentration des Übergangsmetallion niedriger Oxidationsstufe im Reagenz im Bereich vom 10$^{-3}$ bis 2 M liegt.

10. Verfahren nach Anspruch 9, dadurch gekennzeichnet, daß die Konzentration des Übergangsmetallion niedriger Oxidationsstufe im Reagenz im Bereich von 10$^{-3}$ bis 10$^{-2}$ M liegt.

11. Verfahren nach jedem der vorstehenden Ansprüche, dadurch gekennzeichnet, daß das Verfahren mit einem pH-Wert im Bereich von 4 bis 6 ausgeführt wird.

12. Verfahren nach jedem der vorstehenden Ansprüche, dadurch gekennzeichnet, daß die Molarkonzentration des Komplexbildners das 3 bis 10-fache der Molarkonzentration des Übergangsmetallion niedriger Oxidationsstufe beträgt.

13. Verfahren nach jedem der vorstehenden Ansprüche, dadurch gekennzeichnet, daß Formiat oder Acetat als Gegenion mit einer 5 bis 20-fachen Molarkonzentration der Molarkonzentration des Übergangsmetallions niedriger Oxidationsstufe vorhanden ist.

14. Verfahren nach Anspruch 2 und Anspruch 13, dadurch gekennzeichnet, daß Formiat als Gegenion vorhanden ist und das Ein-Elektronen-Reduktionsmittel auf Cr$^{II}$ oder V$^{II}$ basiert und daß bei dem Prozeß der niedrige Oxidationszustand V$^{II}$ von Vanadium oder Cr$^{II}$ von Chrom durch Bestrahlung während dem Dekontaminationsvorgang regeneriert wird.

15. Verfahren nach Anspruch 2, dadurch gekennzeichnet, daß nach der Behandlung des Kühlsystems oder eines dem Kühlsystems zugeordneten Bauteils oder von anderen kontaminierten Anlageteilen das dekontaminierte Reagenz zur Entfernung der Radioaktivität einer Behandlung mit einem Ionentauscherharz unterzogen wird.


**Revendications**

1. Procédé pour éliminer des dépôts essentiellement formés des oxydes d'un ou plusieurs métaux de transition d'une surface, procédé qui consiste à faire entrer ladite surface en contact, à un pH compris dans l'intervalle de 2,0 à 7,0, avec un réactif comprenant un agent réducteur mono-électronique qui est le complexe formé entre un ion de métal de transition à faible degré d'oxydation et un agent complexant, le complexe étant thermiquement stable au pH de travail.

2. Procédé de décontamination du circuit de refroidissement ou d'un composant associé au circuit de refroidissement d'un réacteur nucléaire refroidi par l'eau ou d'autres parties contaminées d'une installation, procédé qui consiste à faire circuler un réactif décontaminant à un pH compris dans l'intervalle de 2,0 à 7,0 dans le circuit de refroidissement du réacteur ou à faire entrer un composant associé au circuit de refroidissement ou contenant d'autres parties contaminées d'une installation en contact avec un réactif décontaminant à un pH compris dans l'intervalle de 2,0 à 7,0, le réactif décontaminant comprenant un agent réducteur mono-électronique qui est le complexe formé entre un ion de métal de transition à faible degré d'oxydation et un agent complexant, le complexe étant thermiquement et radiolytiquement stable au pH de travail.

3. Procédé suivant la revendication 1 ou la revendication 2, dans lequel l'agent complexant, lorsqu'on l'utilise avec un agent réducteur mono-électronique basé sur Cr$^{II}$, favorise l'appariement en ce qui concerne le spin.

4. Procédé suivant l'une quelconque des revendications précédentes, dans lequel l'agent complexant est l'acide éthylènediamine-tétracétique, l'acide citrique, l'acide picolinique, le 2,2'-bipyridyle, l'acide nitrilotriacétique, l'histidine ou la 2,6-dicarboxypyridine.

5. Procédé suivant la revendication 1 ou la revendication 2, qui implique un agent réducteur

12

monoélectronique basé sur V$^{ll}$ et de l'acide picolinique comme agent complexant.

6. Procédé suivant la revendication 1 ou la revendication 2, qui implique un agent réducteur monoélectronique basé sur Cr$^{ll}$ et le bipyridyle comme agent complexant.

7. Procédé suivant l'une quelconque des revendications précédentes, dans lequel le réactif est utilisé à une température comprise entre la température ambiante et 200 °C.

8. Procédé suivant la revendication 6, dans lequel le réactif est utilisé à une température comprise dans un intervalle de 60 à 80 °C.

9. Procédé suivant l'une quelconque des revendications précédentes, dans lequel la concentration de l'ion de métal de transition à faible degré d'oxydation dans le réactif se situe dans l'intervalle de 10$^{-3}$ à 2 M.

10. Procédé suivant la revendication 9, dans lequel la concentration de l'ion de métal de transition à faible degré d'oxydation se situe dans l'intervalle de 10$^{-3}$ à 10$^{-2}$ M.

11. Procédé suivant l'une quelconque des revendications précédentes, qui est mis en œuvre à un pH compris dans l'intervalle de 4 à 6.

12. Procédé suivant l'une quelconque des revendications précédentes, dans lequel la concentration molaire de l'agent complexant va de 3 à 10 fois la concentration molaire de l'ion de métal de transition à faible degré d'oxydation.

13. Procédé suivant l'une quelconque des revendications précédentes, dans lequel un formiate ou un acétate est présent comme ion complémentaire à une concentration molaire de 5 à 20 fois la concentration molaire de l'ion de métal de transition à faible degré d'oxydation.

14. Procédé suivant la revendication 13 subordonnée à la revendication 2, dans lequel un formiate est présent comme ion complémentaire et l'agent réducteur monoélectronique est basé sur Cr$^{ll}$ ou sur V$^{ll}$, procédé dans lequel l'état de faible oxydation V$^{ll}$ du vanadium ou l'état de faible oxydation Cr$^{ll}$ du chrome est régénéré par irradiation au cours de l'opération de décontamination.

15. Procédé suivant la revendication 2, dans lequel, après traitement du circuit de refroidissement ou d'un composant associé au circuit de refroidissement ou à d'autres parties contaminées de l'installation, le réactif décontaminant est soumis à un traitement avec une résine échangeuse d'ions pour en éliminer la radioactivité.